Europäisches Patentamt

European Patent Office

Office européen des brevets

(19)

(11) Veröffentlichungsnummer : **0 056 967**
**B1**

(12) **EUROPÄISCHE PATENTSCHRIFT**

(45) Veröffentlichungstag der Patentschrift :
30.10.85

(21) Anmeldenummer : 82100311.8

(22) Anmeldetag : 18.01.82

(51) Int. Cl.⁴ : **A 01 L 11/00, A 61 D 3/00,
A 01 K 15/04**

(54) **Klammer zur Fesselung eines Hinterbeines von Tieren.**

(30) Priorität : 22.01.81 DE U 8101476

(43) Veröffentlichungstag der Anmeldung :
04.08.82 Patentblatt 82/31

(45) Bekanntmachung des Hinweises auf die Patenterteilung : 30.10.85 Patentblatt 85/44

(84) Benannte Vertragsstaaten :
BE DE FR GB IT NL

(56) Entgegenhaltungen :
CH-A- 179 253
DE-B- 1 171 668
DE-C- 817 019
FR-E- 14 751
GB-A- 847 162
US-A- 3 769 940

(73) Patentinhaber : Rheintechnik Weiland & Kaspar KG
Grube König
D-6680 Neunkirchen/Saar (DE)

(72) Erfinder : Weiland, Werner
Koblenz-Olper-Strasse 172
D-5413 Bendorf-Sayn (DE)

(74) Vertreter : Röbe-Oltmanns, Georg, Dr.
Dotzheimer Strasse 61
D-6200 Wiesbaden (DE)

## Beschreibung

Die Erfindung betrifft eine Klammer für die Fesselung eines Hinterbeines von Tieren, insbesondere Rindern, bestehend aus einem kurz oberhalb des Fußgelenkes vorne und hinten um das Hinterbein legbaren bogenförmigen Teil und einem von hinten auf die Achillessehne drückbaren Teil, bei der das bogenförmige Teil als ovalförmiger Ring ausgebildet ist, der aus zwei Teilen besteht, die auf der einen Seite miteinander verbunden und auf der gegenüberliegenden Seite durch einen Verschluß miteinander verbindbar sind, wobei die Verbindung und der Verschluß, wodurch der Ring geteilt ist, seitlich des Hinterbeines angebracht sind.

Eine derartige Klammer ist aus der CH-A-179 253 bekannt. Bei dieser ist der Ring durch eine U-förmig ausgebildete Grundplatte, die das von hinten auf die Achillessehne drückbare Teil aufnimmt sowie durch einen Lederriemen gebildet. Durch die Grundplatte ist ein Gewindebolzen geführt, dessen in den Innenraum des bogenförmigen Teiles gerichtetes freie Ende das auf die Achillessehne drückbare Teil trägt. Dieses Teil ist etwa U-förmig gestaltet und mit der offenen Seite dem Innenraum des bogenförmigen Teils zugekehrt. Der Lederriemen ist mit seinem einen Ende an der Grundplatte befestigt, das freie Ende des Lederriemens läßt sich in einem an der Grundplatte angeordneten Spannschloß festlegen.

Soll mit der Klammer nach der vorgenannten Schrift der Fuß des Hinterbeines eines Tieres, insbesondere der Huf, behandelt werden, wird das bogenförmige Teil kurz oberhalb des Fußgelenks mit dem U-förmigen Teil nach hinten um das Hinterbein gelegt, so-dann geschlossen und wird dann der Gewindebolzen, dessen äußeres freies Ende einen Handgriff zum Drehen trägt, nach innen gedreht, bis das U-förmige Teil beidseitig der Achillessehne am Hinterbein anliegt. Wird jetzt der Gewindebolzen weiter nach innen gedreht, drückt das U-förmige Teil auch die Achillessehne. Bei ausreichend starkem Druck hebt das Tier den Fuß hoch. Der Huf kann jetzt ohne Gefahr behandelt werden, weil durch die aufgesetzte Klammer bedingt das Tier praktisch nicht schlagen kann.

Die vorgenannte Klammer weist den Nachteil auf, daß mit ihr im Moment des Ansetzens noch kein Druck auf die Achillessehne ausgeübt werden kann. Schlägt das Tier vorher mit dem Hinterbein aus, besteht die Gefahr, daß die Klammer sich vom Hinterbein löst und die die Klammer ansetzende Person verletzt wird.

Aus der DE-C-817 019 ist eine ähnliche Klammer in Art eines Ringes zum Fesseln eines Hinterbeines von Tieren bekannt. Bei dieser ist jedoch der Ring durch eine flache Grundplatte, die das von hinten auf die Achillessehne drückbare Teil aufnimmt sowie den Lederriemen gebildet. Das freie Ende des Lederriemens ist mit einer Kette verbunden, die ihrerseits in eine an der Grundplatte angeordnete Verschlußvorrichtung einhängbar ist. Die Klammer nach der DE-C-817 019 weist die gleichen Nachteile wie die in der CH-A-179 253 offenbarte Klammer auf.

Aus der US-A-3 769 940 sowie der DE-B-1 171 668 sind ferner Klammern für die Fesselung eines Hinterbeines von Tieren, insbesondere Rindern, bekannt, die aus einem kurz oberhalb des Fußgelenkes vorn und hinten um das Hinterbein legbaren bogenförmigen Teil und einem von hinten auf die Achillessehne drückbaren Teil bestehen. Bei diesen wird das bogenförmige Teil durch einen in etwa ovalförmigen, einseitig offenen Haken gebildet. Durch das im angelegten Zustand nach hinten gerichtete Teil des Hakens ist ein Gewindebolzen geführt, dessen in den Innenraum des Hakens gerichtetes freie Ende das auf die Achillessehne drückbare Teil trägt. Dieses Teil ist etwa V-förmig gestaltet, und mit der offenen Seite dem Innenraum des Hakens zugekehrt. Zum Behandeln des Hinterbeines eines Tieres wird der Haken kurz oberhalb des Fußgelenkes mit dem V-förmigen Teil nach hinten um das Hinterbein gelegt und dann der Gewindebolzen nach innen gedreht, bis das V-förmige Teil beidseitig der Achillessehne am Hinterbein anliegt. Beim weiteren nach innen drehen des Gewindebolzens drückt das V-förmige Teil auf die Achillessehne, so daß das Tier den Fuß hochhebt.

Klammern gemäß der beiden letztgenannten Schriften weisen gleichfalls den Nachteil auf, daß sie erst dann nicht mehr abrutschen können, wenn das verschiebliche Teil ausreichend fest gegen die Achillessehne gedrückt ist.

Aus der GB-A-847 162 ist eine seitlich an das Hinterbein eines Tieres anlegbare Klammer für die Fesselung des Hinterbeines bekannt, bestehend aus einem von hinten um das Hinterbein legbaren bogenförmigen Teil, das an seinem einen Ende ein auf die Innenseite des Beines drückbares Teil und seinem anderen Ende einen Gewindebolzen zur Aufnahme eines auf die Außenseite des Beines drückbaren Teiles aufnimmt. Eine derartige Klammer weist den Nachteil auf, daß sie erst dann nicht mehr abrutschen kann, wenn das an die Außenseite des Beines drückbare Teil ausreichend fest gegen das Bein gedrückt ist. Da mit der genannten Klammer kein Druck auf die Achillessehne ausgeübt wird, ist zudem nicht gewährleistet, daß das Tier bei angelegter Klammer mit dem Hinterbein kaum noch ausschlägt.

Aus der FR-E-14 751 ist ausschließlich eine ringförmige Vorrichtung zur Fesselung eines Hinterbeines von Tieren bekannt. Diese Vorrichtung dient jedoch nicht der Klammerung des Hinterbeines, so daß das Tier nicht mehr ausschlagen kann, sondern lediglich zum Festbinden des Tieres.

Aufgabe vorliegender Erfindung ist es, eine Klammer der eingangs genannten Art zu schaffen, die einmal an das Hinterbein des Tieres angelegt, nicht mehr abrutschen kann und bei der im Moment des Ansetzens sofort ein Druck auf die Achillessehne ausgeübt wird, bei dem das Tier mit dem Hinterbein kaum noch ausschlägt.

Diese Aufgabe wird durch eine Klammer der eingangs genannten Art mit folgenden Merkmalen gelöst :

— die Verbindung ist ein Scharnier und der Verschluß ein Schnappverschluß,

— der eine Teil des Ringes weist an dem anderen Teil zugekehrten Ende einen vorstehenden, ausschwenkbaren Haken auf,

— der Haken übergreift einen senkrecht zu dessen Schwenkebene im anderen Teil in einem Schlitz angeordneten Bolzen,

— der Haken im einen Teil ist gegen den Druck einer Feder ausschwenkbar.

Der Ring weist zweckmäßig auf der Hinterseite des Beines, in etwa in der längsten Achse liegend, eine Durchbrechung, vorteilhaft im Innengewinde auf, durch die ein Gewindebolzen mit Außengewinde geführt ist. Das im Innenraum des Ringes liegende freie Ende dieses Bolzens trägt drehbar das auf die Achillessehne drückbare Teil. Dieses Teil ist zweckmäßig V-förmig gestaltet, mit dem offenen Ende der Achillessehne zugekehrt. Das außenliegende Teil des Gewindebolzens trägt vorteilhaft einen Handgriff, damit der Gewindebolzen leicht gedreht werden kann.

Bevor die Klammer angelegt wird, wird bei geöffnetem Verschluß das auf die Achillessehne drückbare Teil soweit vorgeschoben, daß es beim Anliegen bereits auf die Achillessehne drückt. Dann werden die beiden Teile um das Hinterbein gelegt und zusammengedrückt, bis der Verschluß sich schließt. Der Ring sitzt jetzt bereits unverrückbar auf dem Hinterbein. Erst jetzt wird das auf die Achillessehne drückbare Teil mittels des Gewindebolzens soweit vorgeschoben, daß das Tier den Fuß hebt.

Weitere Merkmale der Erfindung sind in der Beschreibung der Figuren dargestellt, wobei bemerkt wird, daß alle Einzelmerkmale und alle Kombinationen von Einzelmerkmalen erfinderisch sind.

In den Figuren 1 bis 3 ist die Erfindung an einer Ausführungsform beispielsweise dargestellt, ohne auf diese Ausführungsform beschränkt zu sein.

Figur 1 zeigt eine Aufsicht auf eine erfindungsgemäße Klammer bei geöffnetem Ring ;

Figur 2 zeigt eine Aufsicht auf den Schnappverschluß nach der Linie A-A in Fig. 1 und

Figur 3 eine angelegte Klammer.

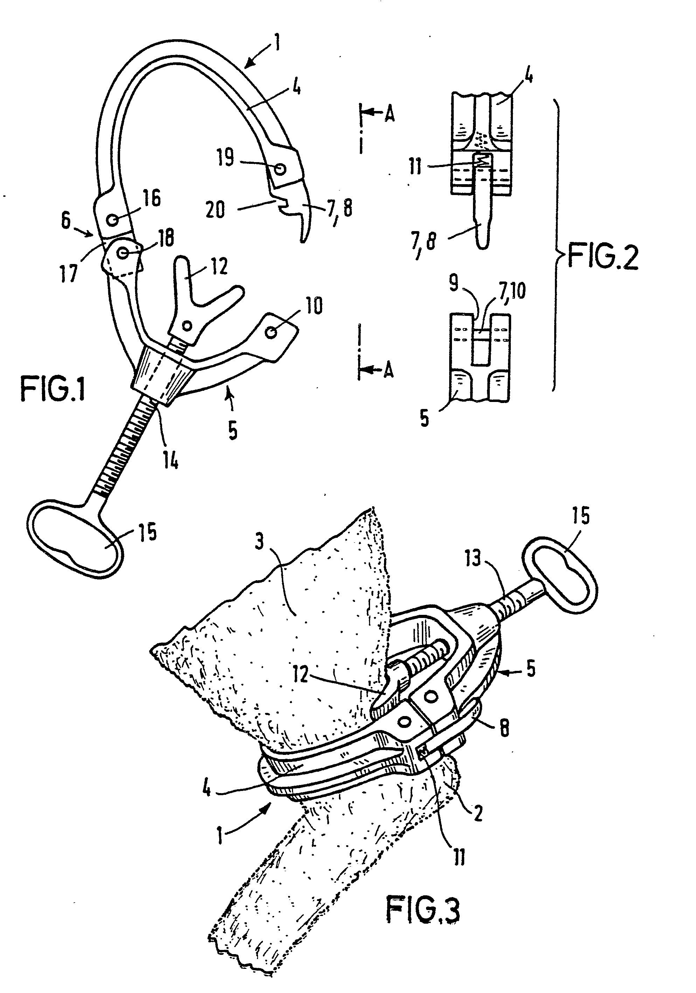

Die Klammer besteht aus dem kurz oberhalb des Fußgelenkes um ein Hinterbein legbaren Ring 1 mit dem auf die Achillessehne aufdrückbaren Teil 12, welches drehbar auf dem im Innenraum des Ringes 1 liegenden freien Ende eines Gewindebolzens 13 befestigt ist, der ein Außengewinde aufweist, mit welchem er in ein Innengewinde in einer Durchbrechung 14 im Ring 1 eingreift. Das außen liegende freie Ende des Gewindebolzens 13 trägt zweckmäßig einen Handgriff 15, um das Drehen des Gewindebolzens 13 zu erleichtern. Der Ring 1 wird kurz oberhalb des Fußgelenkes 2 um das Hinterbein 3 des Tieres, insbesondere Rindes, gelegt. Der Ring 1 ist entsprechend dem Querschnitt des Hinterbeines 3 eines Tieres, insbesondere Rindes, kurz oberhalb des Fußgelenkes 2 ovalförmig gestaltet. Die Durchbrechung 14 für den Gewindebolzen 13 ist, etwa parallel der längsten Achse des Ringes 1 durch das Teil geführt, welches auf der Hinterseite des Hinterbeines eines Tieres, insbesondere Rindes, liegt. Um das Anlegen der Klammer möglichst einfach zu gestalten, ist der Ring 1 senkrecht zur längsten Achse und parallel der kürzesten Achse in die beiden Teile 4 und 5 geteilt, die auf der einen Seite durch ein Scharnier 6 gelenkig miteinander verbunden sind und auf der anderen Seite zur Verbindung der beiden Teile 4 und 5 miteinander einen Schnappverschluß 7 aufweisen. Zur Bildung des Scharnieres 6 weist das eine Teil 4 des Ringes 1 im dem anderen Teil 5 zugekehrten Ende einen nichtdargestellten Schlitz auf, in dem mittels eines Bolzens 16 eine Scharnierlasche 17 befestigt ist, die in einen nicht dargestellten Schlitz in diesem Teil 4 zugekehrten Ende des anderen Teiles 5 eingreift und hier mit einem Bolzen 18 gelenkig befestigt ist. Auf der gegenüberliegenden Seite des Ringes 1 befindet sich der Schnappverschluß 7. Das eine Teil 4 des Ringes 1 weist hier einen nicht näher bezeichneten Schlitz auf, in dem ein Haken 8 mittels eines Bolzens 19 nach außen gegen den Druck einer Feder 11 ausschwenkbar befestigt ist. Die Feder 11 ist auf der Außenseite des Teiles 4 vor dem Ende des Hakens 8 in einer Ausnehmung befestigt, wie in Fig. 2 oben dargestellt. Das dem Teil 4 zugekehrte Ende des anderen Teiles 5 weist auf dieser Seite einen Schlitz 9 auf, in dem senkrecht zur Schwenkebene des Hakens 8 ein Bolzen 10 befestigt ist. Werden die beiden Teile 4 und 5 hier zusammengedrückt, legt sich die Kurve am freien Ende des Hakens 8 außen an den Bolzen 10. Der Haken 8 wird nach außen gedrückt, bis die Nase 20 am Bolzen 10 vorbeigerutscht ist und der Haken 8 den Bolzen 10 übergreift.

Soll die Klammer angelegt werden, wird der Schnappverschluß 7 geöffnet, derart, daß man hinter das freie Ende des Hakens 8 greift, diesen nach außen schwenkt und dann die beiden einander zugekehrten Enden der Teile 4 und 5 auseinanderzieht. Jetzt wird der Gewindebolzen 13 mittels des Handgriffes 15 so weit vorgedreht, daß das an die Achillessehne anlegbare Teil 12 auf diese drückt, wenn man den Ring 1 schließt. Nachfolgend wird die Klammer 1 kurz oberhalb des Fußgelenkes 2 um das Hinterbein gelegt, so daß das Teil 12 auf der Achillessehne liegt, und werden dann die einander zugekehrten Enden der beiden Teile 4 und 5 des Ringes 1 zusammengedrückt, bis der Schnappverschluß 7 geschlossen ist. Anschließend wird das Teil 12 mittels des Gewindebolzens 13 so weit vorgeschoben, bis das Tier den Fuß hebt.

**Patentanspruch**

Klammer für die Fesselung eines Hinterbeines (3) von Tieren, insbesondere Rindern, bestehend aus einem kurz oberhalb des Fußgelenkes (2) vorne und hinten um das Hinterbein (3) legbaren bogenförmigen Teil und einem von hinten auf die Achillessehne drückbaren Teil (12), bei der das bogenförmige Teil als ovalförmiger Ring (1) ausgebildet ist, der aus zwei Teilen (4, 5) besteht, die auf der einen Seite miteinander verbunden und auf der gegenüberliegenden Seite durch einen Verschluß miteinander verbindbar sind, wobei die Verbindung und der Verschluß, wodurch der Ring geteilt ist, seitlich des Hinterbeines (3) angebracht sind, gekennzeichnet durch folgende Merkmale :

— die Verbindung ist ein Scharnier (6) und der Verschluß ein Schnappverschluß (7),

— der eine Teil (4) des Ringes (1) weist an dem anderen Teil (5) zugekehrten Ende einen vorstehenden, ausschwenkbaren Haken (8) auf,

— der Haken (8) übergreift einen senkrecht zu dessen Schwenkebene im anderen Teil (5) in einem Schlitz (9) angeordneten Bolzen (10),

— der Haken (8) im einen Teil (4) ist gegen den Druck einer Feder (11) ausschwenkbar.

## Claim

Clamp for fettering a hind leg (3) of an animal, particularly of cattle, which clamp consists of an arcuate member placable before and behind about said hind leg (3) shortly above the ankle-joint (2), and of a member (12) pressable from behind against the Achilles tendon, the arcuate member being configured as an oviform ring (1) consisting of two parts (4, 5) connected to each other on one side and being attachable to each other by locking means on the opposite side, wherein the connection and the locking means by which said ring is parted are located laterally of said hind leg, the clamp being characterized by the following features :

— said connection is a hinge (6) and said locking means is a latch (7),

— one part (4) of the ring (1) comprises at its end thereof facing the other part (5) a protruding, outwards swingable hook (8),

— said hook (8) engages a bolt (10) extending perpendicularly of the plane of rotation of said hook and being positioned in a slot (9) in said other part (5),

— said hook (8) provided in said one part (4) is swingable outwards against the bias of a spring (11).

## Revendication

Dispositif de serrage pour l'immobilisation de la jambe postérieure d'animaux, notamment de bovins, consistant en une pièce en forme d'arc, applicable, un peu au-dessus de l'articulation (2) du pied, vers l'avant et vers l'arrière autour de la jambe postérieure (3) et une pièce (12) applicable, par l'arrière, sur le tendon d'Achille, la pièce en forme d'arc étant constituée par un anneau (1) de forme ovale, composé de deux parties (4, 5) qui sont, sur un côté, reliées entre elles et qui peuvent, sur le côté opposé, être reliées par un dispositif de fermeture, les dispositifs d'assemblage et de fermeture — divisant l'anneau — sont applicables sur le côté de la jambe postérieure (3) caractérisé par les caractéristiques suivantes :

— le dispositif d'assemblage est une articulation à charnière (6) et le dispositif de fermeture est un dispositif de fermeture à déclic (7),

— une partie (4) de l'anneau (1) présente, à son extrémité tournée vers l'autre partie (5), un crochet (8) saillant pivotant vers l'extérieur,

— le crochet (8) s'engage avec un axe (10) perpendiculaire au plan de pivotement du crochet (8), disposé dans l'autre partie (5) dans une fente (9),

— le crochet (8) est monté dans une partie (4) pour pouvoir pivoter vers l'extérieur sous l'action d'un ressort (11).

FIG.1

FIG.2

FIG.3